# EUROPEAN PATENT SPECIFICATION

(11) **EP 3 887 775 B1**
(45) Date of publication and mention of the grant of the patent: **25.10.2023**
(21) Application number: 19759862.6
(22) Date of filing: 16.08.2019
(51) Int. Cl.: G01F 23/263

(54) **NON-CONTACT, REMOTELY-MONITORED, LEVEL SENSOR SYSTEM**
KONTAKTLOSES, FERNÜBERWACHTES FÜLLSTANDSSENSORSYSTEM
SYSTÈME DE CAPTEUR DE NIVEAU SANS CONTACT, SURVEILLÉ À DISTANCE

(30) Priority: 26.11.2018 US 201862771394 P
(43) Date of publication of application: 06.10.2021
(73) Proprietor: Parker-Hannifin Corporation, Cleveland, OH 44124 (US)
(72) Inventor: YORK, Alexander, Cleveland, OH 44124 (US); DUNN, Jason, T., Cleveland, OH 44124 (US)
(74) Representative: Murgitroyd & Company
(86) International application number: PCT/US2019/046790
(87) International publication number: WO 2020/112182

(56) References cited:
- EP-A1- 1 528 375
- US-A1- 2006 196 264
- US-A1- 2011 048 126
- US-A1- 2016 230 625
- US-A1- 2018 100 754
- US-A1- 2018 228 977

## Description

### FIELD

The present disclosure relates generally to level sensors, and more particularly, to liquid level sensors for sensing a liquid level within a container and wirelessly transmitting data indicative of the liquid level to facilitate remote monitoring of the liquid level.

### BACKGROUND

Liquid level sensors can be divided into two groups: point level sensors and continuous level sensors. Point level sensors are used to sense whether liquid is present or absent at a particular point (e.g., a particular height within a container). Whereas, continuous level sensors can provide measurements of liquid levels within a range of heights as the amount of liquid within a container varies.

One example of a continuous liquid level sensor is a capacitive liquid level sensor. A capacitive liquid level sensor operates by measuring a capacitance between two conductors, referred to as plates or electrodes. In the absence of liquid, the two conductors can have an intrinsic capacitance, which the capacitive liquid level sensor can detect. The presence of liquid near the two conductors causes the capacitance between the two conductors to vary. The capacitive liquid level sensor can measure this change in capacitance, and determine a liquid level based on the change in capacitance. The capacitive liquid level sensor can also detect this change through a non-conductive barrier, such as through a plastic container.

Furthermore, capacitive liquid level sensors can be classified as contact or non-contact sensors. Contact sensors come into contact with the liquid being measured. For instance, one or more electrodes of a contact capacitive liquid level sensor can be positioned inside a container such that the electrode(s) directly contact the liquid being measured. On the other hand, non-contact sensors are isolated form the liquid being sensed and do not contact the liquid directly.

US 2011/048126 describes an arrangement for fill-level measurement of an electrically conductive liquid in a container comprising electrodes connected to terminals by strip conductors, whereby the electrodes and the strip conductors are embedded in a flexible carrier medium, and the strip conductors are elastic and crushable. US 2018/100754 A1 discloses another prior art level sensor which can be mounted on receptacles of irregular shape.

### SUMMARY

The present invention provides a liquid level sensor as described in appended claim 1. The liquid level sensor includes a first layer, a stretchable electrode layer provided on the first layer, and a second layer provided on the stretchable electrode layer. The stretchable electrode layer includes a first stretchable receiver electrode and a stretchable transmitter electrode. The stretchable electrode layer is stretchable and bendable such that the stretchable electrode layer conforms to a shape of a non-flat outer surface of a container when the liquid level sensor is attached to the non-flat outer surface. The stretchable electrode layer is configured to be mounted to the non-flat outer surface of the container along a desired range of heights to be sensed within the container.

The liquid level sensor has a Young's modulus of less than 100 megapascals.

The present invention also provides a system for sensing a liquid level within a container as described in the appended claims. The system includes a liquid level sensor and a computing device. The liquid level sensor includes a stretchable electrode layer having a first a first stretchable receiver electrode and a stretchable transmitter electrode. The computing device is configured to determine: a first capacitance between the first stretchable receiver electrode and the stretchable transmitter electrode. The liquid level sensor has a Young's modulus of less than 100 megapascals.

The present invention also provides a method for sensing a liquid level within a container as described in the appended claims. The method includes attaching a liquid level sensor according to any of claims 1 to 10 to a non-flat, outer surface of the container such that the stretchable electrode layer conforms to a shape of the non-flat, outer surface of the container, wherein the stretchable electrode layer is mounted along a desired range of heights to be sensed within the container. The method also includes determining, using a computing device, a first capacitance between a first stretchable receiver electrode of the stretchable electrode layer and a stretchable transmitter electrode of the stretchable electrode layer. In addition, the method includes determining, using the computing device, the liquid level within the container using at least the first capacitance.

The features, functions, and advantages that have been discussed can be achieved independently in various examples further details of which can be seen with reference to the following description and figures. BRIEF DESCRIPTION OF THE FIGURES

The novel features believed characteristic of the illustrative examples are set forth in the appended claims. The illustrative examples, however, as well as a preferred mode of use, further objectives and descriptions thereof, will best be understood by reference to the following detailed description of an illustrative example of the present disclosure when read in conjunction with the accompanying figures, wherein:
Figure 1 illustrates an example system for sensing a liquid level within a container, according to an example embodiment.
Figure 2 illustrates a top view of an example stretchable electrode layer of a liquid level sensor, according to an example embodiment.
Figure 3 illustrates a top view of another example stretchable electrode layer of a liquid level sensor, according to an example embodiment.
Figure 4 illustrates a cross-sectional side view of a portion of an example liquid level sensor, according to an example embodiment.
Figure 5 is a flow chart of an example method for sensing a liquid level within a container, according to an example embodiment.
Figure 6 is a flow chart showing additional operations that can be carried out in conjunction with the method shown in Figure 5.

### DETAILED DESCRIPTION

Disclosed examples will now be described more fully hereinafter with reference to the accompanying figures, in which some, but not all of the disclosed examples are shown. Indeed, several different examples may be provided and should not be construed as limited to the examples set forth herein. Rather, these examples are provided so that this disclosure will be thorough and complete and will fully convey the scope of the disclosure to those skilled in the art.

In some liquid level sensing situations, it is desirable to isolate a liquid level sensor from the liquid being sensed as well as any vapors or foam being exuded by the liquid. Isolating the liquid level sensor from the liquid can help to prevent the liquid, vapors, and/or foam from corroding, degrading, or damaging the liquid level sensor.

One solution to isolating the liquid level sensor from the liquid, vapors, and/or foam is to place the liquid level sensor on an outside of a container containing the liquid. This non-contact approach has the additional advantage of eliminating the need to run wires from a liquid level sensor within the container to an exterior of the container, which could compromise an integrity of the container.

The electrodes of conventional non-contact, capacitive liquid level sensors are provided on flexible plastic substrates, such as flex or rigid-flex printed circuit boards. While this approach provides some degree of flexibility, the electrodes provided on these plastic substrates are rigid, and the plastic substrates themselves can also be rigid to some extent, thereby confining the use of these conventional sensors to flat surfaces. As such, conventional non-contact capacitive liquid level sensors cannot be used effectively on non-flat surfaces, such as round containers.

Described herein are non-contact, liquid level sensors that address this and potentially other issues. An example liquid level sensor includes a first layer, a stretchable electrode layer provided on the first layer, and a second layer provided on the stretchable electrode layer. The stretchable electrode layer can include a first stretchable receiver electrode and a stretchable transmitter electrode. Each of these electrodes can, for example, be electroactive polymers.

The use of a stretchable electrode layer provided between two flexible layers produces a liquid level sensor that can stretch, bend, and conform to the shape of a non-flat surface. Unlike sensors provided on flex or rigid-flex printed circuit boards, the liquid level sensors described herein can conform to many different shapes easily. In the claimed invention the liquid level sensor has a Young's modulus of less than 100 megapascals (MPa). For instance, the liquid level sensor can have a Young's modulus of 1.1 MPa or 0.1 MPa. With this construction, the liquid level sensor can stretch when pulled in different directions. For instance, when pulled from opposite ends, the liquid level sensor can stretch by at least two percent (e.g., from 10 inches i.e. 25.4 mm in length to 10.2 inches i.e. 25.908 mm in length). Depending on the materials from which the liquid level sensor is manufactured, the liquid level sensor could stretch further. In some cases, the liquid level sensor can stretch by 20-30%. In other cases, the liquid level sensor can stretch 100% or more (i.e., double in length). For comparison, flex printed circuit boards can bend but cannot stretch easily; flex printed circuit boards have a Young modulus of around 5000-30000 MPa. Furthermore, the use of a stretchable electrode layer also allows the liquid level sensors described herein to be manufactured more cost-effectively than conventional liquid level sensors that are manufactured on flex or rigid-flex printed circuit boards.

In some examples, the stretchable electrode layer can also include a second stretchable receiver electrode, with the stretchable transmitter electrode being arranged between the first stretchable receiver electrode and the second stretchable receiver electrode. The electrodes of the stretchable electrode layer can be arranged in a manner that allows for self-calibration. By way of example, a width of the first stretchable receiver electrode can taper from a first width at a first position along a length of the stretchable electrode layer to a second width at a second position along the length of the stretchable electrode layer. Further, a width of the second stretchable receiver electrode layer can taper from a third width at the second position to a fourth width at the first position. With this arrangement, a computing device coupled to the electrodes of the stretchable electrode layer can calculate a liquid level within a container to which the liquid level sensor is attached based on a ratio between: a first capacitance between the first stretchable receiver electrode and the stretchable transmitter electrode, and a second capacitance between the second stretchable receiver electrode and the stretchable transmitter electrode.

Systems and methods making use of described non-contact, liquid level sensors are also provided herein. An example system includes a computing device that can determine a liquid level within a container based at least on a first capacitance. Optionally, the computing device can then wirelessly transmit data indicative of the liquid level to another device. With this arrangement, the system can be used to remotely monitor the liquid level within the container. Remotely monitoring the liquid level within the container can reduce a need to manually check the liquid level and can also facilitate automated or semi-automated refilling/restocking of the container. For instance, data wirelessly received from the computing device of the system can be analyzed to determine whether the liquid level satisfies a threshold condition, and based on the threshold condition being satisfied, a refilling process or restocking process can be triggered.

Various other features of the liquid level sensors and associated systems and methods are also described hereinafter with reference to the accompanying figures.

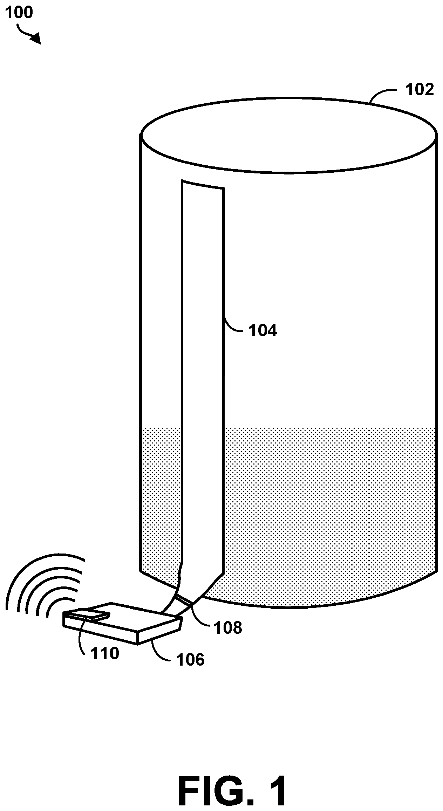

Referring now to Figure 1, an example system 100 for sensing a liquid level within a container 102 is illustrated. As shown in Figure 1, system 100 includes a liquid level sensor 104 and a computing device 106.

Container 102 can be a receptacle for storing a liquid, such as soap, fertilizer, pesticide, or diesel exhaust fluid. Container 102 can have one or more non-flat surfaces, and liquid level sensor 104 can be attached to one of these non-flat surfaces. For instance, as depicted, container 102 can be a round container, and liquid level sensor 104 can be attached to a round surface on the exterior of container 102. Liquid level sensor 104 can stretch, bend, and conform to the round surface on the exterior of container 102.

In line with the discussion above, liquid level sensor 104 includes a stretchable electrode layer (not shown in Figure 1) having at least one stretchable receiver electrode and a stretchable transmitter electrode. The at least one stretchable receiver electrode can include a first stretchable receiver electrode and a second stretchable receiver electrode. The first stretchable receiver electrode, the optional second stretchable receiver electrode, and the stretchable transmitter electrode can be electroactive polymers. Further, the first stretchable receiver electrode, the optional second stretchable receiver electrode, and the stretchable transmitter electrode can be conductively-coupled to computing device 106 by way of an electrical connector 108.

Computing device 106 can include a processor and a non-transitory computer-readable medium storing program instructions that are executable by the processor to carry out any of the computing device functions described herein. The processor could be any type of processor, such as a microprocessor, digital signal processor, multicore processor, etc. Alternatively, computing device 106 could include a group of processors that are configured to execute the program instructions, or multiple groups of processors that are configured to execute respective program instructions.

Computing device 106 can also include a radio-frequency (RF) communication module 110 through which computing device 106 is configured to communicate with one or more other devices. RF communication module 110 can include an RF receiver and/or an RF transmitter. For instance, RF communication module 110 can include an RF transceiver. RF communication module 110 can also include one or more other radio components, such as an amplifier, mixer, filter, and/or microcontroller.

RF communication module 110 can be configured to wirelessly transmit communication signals. Communication signals transmitted by RF communication module 110 can include data indicative of a liquid level within container 102. The data could include a percentage within a range. Alternatively, the data could include one or more capacitance measurements, from which the liquid level can be derived. Additionally or alternatively, RF communication module 110 can be configured to wirelessly transmit communication signals. RF communication module 110 can be configured to transmit and/or receive communication signals that comply with one or more wireless communication protocols, such as Wi-Fi, Bluetooth, Zigbee, Z-Wave etc. One or more components of computing device 106 can be provided on a printed circuit board.

Computing device 106 can be configured to determine a capacitance between a stretchable receiver electrode and the stretchable transmitter electrode. In one approach, example, the stretchable electrode layer can include a single stretchable receiver electrode and computing device 106 can determine the capacitance by exciting the stretchable transmitter electrode with a current source and determining a length of time between the excitation and a time when a voltage between the stretchable receiver electrode and the stretchable transmitter electrode reaches a reference voltage. The length of time can then be converted into a capacitance value.

In another example, the stretchable electrode layer can also include a second stretchable receiver electrode. With this arrangement, computing device 106 can determine a second capacitance by determining a length of time between the excitation and a time when a voltage between the second stretchable receiver electrode and the stretchable transmitter electrode reaches a reference voltage, and then converting the length of time to a capacitance value. Other approaches are also possible.

Exciting the stretchable transmitter electrode produces electric field lines that couple to the first stretchable receiver electrode and, if included, to the second stretchable receiver electrode. In addition, with liquid level sensor 104 placed on container 102, exciting the stretchable transmitter electrode also produces electric field lines that project into the interior of container 102. If liquid is present within the container along a portion of the surface of container 102 to which liquid level sensor 104 is attached, the electric field lines that project into the interior of container 102 can couple with the liquid, thereby increasing the measured capacitance(s).

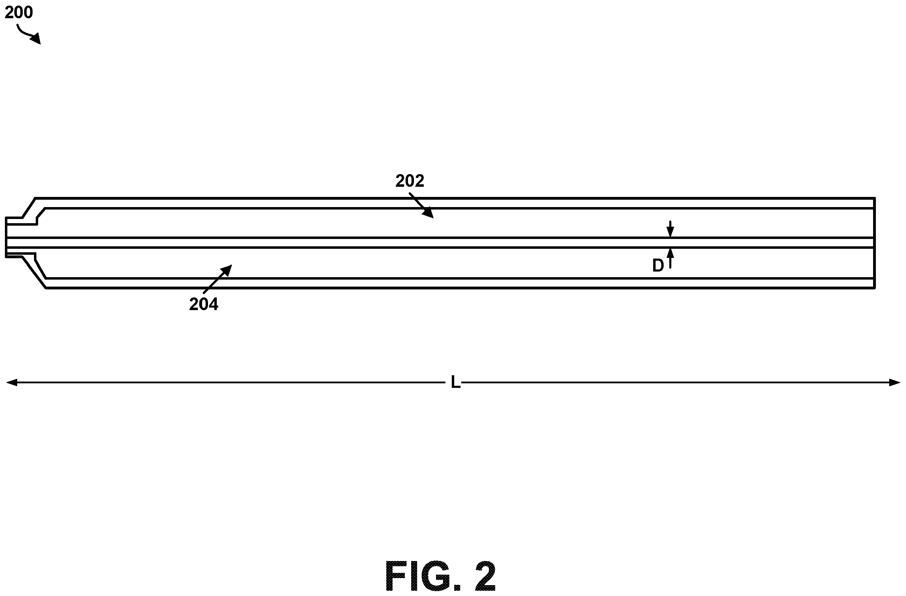

Figure 2 illustrates a top view of an example stretchable electrode layer 200 of a liquid level sensor. Stretchable electrode layer 200 could represent a stretchable electrode layer of liquid level sensor 104 of Figure 1, for example. As shown in Figure 2, stretchable electrode layer 200 includes a first stretchable receiver electrode 202 and a stretchable transmitter electrode 204. First stretchable receiver electrode 202 and stretchable transmitter electrode 204 are separated by a distance D.

Stretchable electrode layer 200 can be adhered to a container with a length L of stretchable receiver electrode oriented generally parallel to a height of the container. With this design, a computing device, such as computing device 106 of Figure 1, can determine a liquid level based within the container based on a capacitance between first stretchable receiver electrode 202 and stretchable electrode 204. As the liquid level decreases along the length of the stretchable electrode layer 200, the capacitance will decrease, since less of the electric field lines couple to liquid within the container. The computing device can be calibrated such that the computing device is able to correlate the capacitance to the liquid level. An example calibration procedure can involve determining a first capacitance for a first known liquid level along the length L and determining a second capacitance for a second known liquid level along the length L.

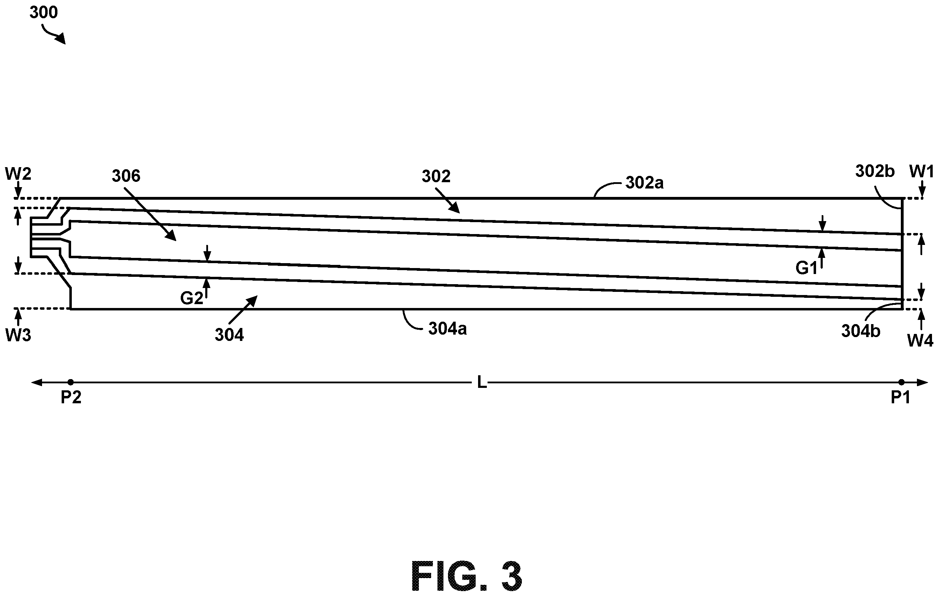

Figure 3 illustrates a top view of an example stretchable electrode layer 300 of a liquid level sensor. Stretchable electrode layer 300 could represent a stretchable electrode layer of liquid level sensor 104 of Figure 1, for example. As shown in Figure 3, stretchable electrode layer 300 includes a first stretchable receiver electrode 302, a second stretchable receiver electrode 304, and a stretchable transmitter electrode 306 positioned between first stretchable receiver electrode 302 and second stretchable receiver electrode 304.

A width of first stretchable receiver electrode 302 tapers from a first width W1 at a first position P1 along a length L of stretchable electrode layer 300 to a second width W2 at a second position P2 along the length L of stretchable electrode layer 300. A width of second stretchable receiver electrode 304 tapers from a third width at the second position P2 to a fourth width at the first position P1. With this design, a computing device, such as computing device 106 of Figure 1, can determine a liquid level based on a ratio between: a first capacitance between first stretchable receiver electrode 302 and stretchable transmitter electrode 306 and a second capacitance between second stretchable receiver electrode 304 and stretchable transmitter electrode 306. The oppositely-directed tapering of first stretchable receiver electrode 302 and second stretchable receiver electrode 304 ensures that the ratio between the first capacitance and the second capacitance is proportional to the liquid level along the length L of stretchable electrode layer 300.

First stretchable receiver electrode 302 is generally triangularly-shaped. When viewed from the top, an overall shape of first stretchable receiver electrode 302 resembles a triangle. Similarly, second stretchable receiver electrode 304 is generally triangularly-shaped. In other examples, first stretchable receiver electrode 302 and second stretchable receiver electrode 304 could have other shapes, such as more of a trapezoidal shape. However, the use of generally triangularly-shaped electrodes is more cost-effective than other shapes that have larger geometric areas, since less material is required for manufacturing the electrodes. The use of generally triangular-shaped electrodes also allows the stretchable electrode layer to have a uniform width along the length L of the stretchable electrode layer 300.

Stretchable electrode layer 300 can be attached to a container and oriented such that the length L is generally parallel to a height of the container. A liquid level sensor having stretchable electrode layer 300 can be attached to a container with the first position P1 positioned near a top of a desired range of heights to be sensed or the second position P2 positioned near the top of the desired range of heights to be sensed, depending on the desired implementation.

In the example shown in Figure 3, the first width W1 is approximately equal to the third width W3, and the second width W2 is approximately equal to the fourth width W4. As a result, in an arrangement where the first position P1 is at a higher height on a container than the second position P2, when the liquid level is at or above the first position P1, the first capacitance and the second capacitance may be about equal. This is because, between first position P1 and second position P2, first stretchable receiver electrode 302 and second stretchable receiver electrode 304 have generally equal geometric surface areas.

As the liquid level drops below position P1, the first capacitance and the second capacitance will each decrease, since less of the electric field lines couple to liquid within the container. However, because of the differing widths of first stretchable receiver electrode 302 and second stretchable receiver electrode 304 at the first position P1, the first capacitance may decrease by an amount that is more than an amount by which the second capacitance decreases. Between the first position P1 and the second position P2, the difference between the first capacitance and the second capacitance may continue to increase as the liquid level drops. Due to this effect, the computing device can infer a liquid level along the length L based on a ratio between the first capacitance and the second capacitance.

The configuration shown in Figure 3 is advantageous since, when the liquid level exceeds the first position, the first capacitance and the second capacitance are about equal. In other stretchable electrode layers, the first stretchable receiver electrode and the second stretchable receiver electrode can have geometric surface areas between the first position and the second position that are different from each other. To account for the differing geometric surface areas, a computing device may carry out a calibration process to determine the ratio between the first capacitance and the second capacitance when the liquid level exceeds the first position P1.

As further shown in Figure 3, within a plane of stretchable electrode layer 300, a first side 302a of first stretchable receiver electrode 302 is perpendicular to a first end of first stretchable receiver electrode 302, a first side 304a of second stretchable receiver electrode 304 is perpendicular to a first end 304b of second stretchable receiver electrode 304, and first side 302a is parallel to first side 304a. Further, the first stretchable receiver electrode 302 and the stretchable transmitter electrode 306 are separated by a first gap G1, and the second stretchable receiver electrode 304 and the stretchable transmitter electrode 306 are separated by a second gap G2, with the first gap G1 being approximately equal to the second gap G2. This symmetric configuration can make it easier to determine a liquid level based on a ratio between the first capacitance and the second capacitance, since the ratio between the first capacitance and the second capacitance may vary in a predictable manner as the liquid level changes (e.g., a linear fashion). The predictable variation of the ratio also eliminates the need for a calibration process. Whereas, with conventional liquid level sensors, reference capacitances might need to be established for a particular liquid and/or container at one or more reference liquid levels, before the liquid level sensor can be used to determine a liquid level.

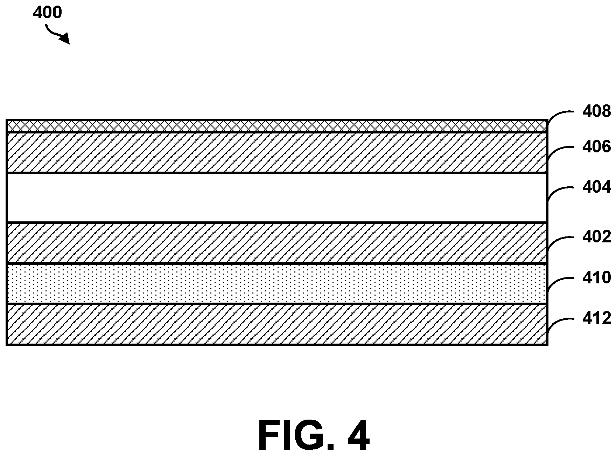

Figure 4 illustrates a cross-sectional side view of a portion of an example liquid level sensor 400. Liquid level sensor 400 could represent a portion of liquid level sensor 104 shown in Figure 1, for example. As shown in Figure 4, liquid level sensor 400 includes a first layer 402, a stretchable electrode layer 404, a second layer 406, and an adhesive layer 408. Optionally, liquid level sensor 400 can also include a shielding layer 410 and a third layer 412. The relative heights of the various layers of liquid level sensor 400 depicted in Figure 4 are not meant to be limiting. Further, since the view illustrated in Figure 4 is a side view, tapering of the widths of the electrodes within stretchable electrode layer 404 is not shown.

In line with the discussion above, stretchable electrode layer can include multiple electrodes, which can, for example, be made of electroactive polymers. Further, first layer 402 and second layer 406 can be dielectric polymer layers that cover electrodes of stretchable electrode layer 404 along a length of liquid level sensor 300. This sandwich design yields a liquid level sensor that can stretch, bend, and conform to a non-flat surface of a container. The Young's modulus of liquid level sensor 300 is less than 100 MPa (e.g., 1.1 MPa, 0.1 MPa, etc.).

Adhesive layer 408 can be printed on second layer 406, and can be configured for adhering liquid level sensor 400 to a surface of a container. For instance, adhesive layer 408 can be a pressure-sensitive adhesive which forms a bond with a surface when pressure is applied.

Shielding layer 410 can be a conductive layer that is made of a conductive material, such as a metal. Further, third layer 412 can be a dielectric polymer layer that covers and insulates shielding layer 410. The presence of shielding layer 410 can shield electrodes of stretchable electrode layer 404 from electrical noise in an environment, thereby improving the accuracy of liquid level sensor 400.

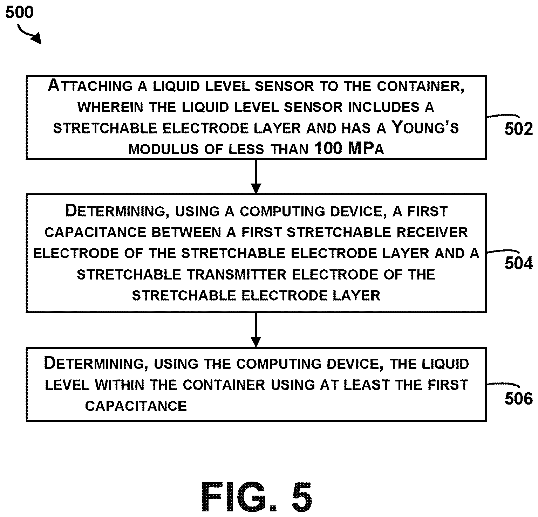

Figure 5 is a flow chart of an example method 500 for sensing a liquid level within a container, according to an example embodiment. Method 500 shown in Figure 5 presents an example of a method that, for example, could be used with system 100 of Figure 1, for example, or any of the systems disclosed herein. Block 502 of Figure 5 can be carried out by a user or a robotic device. Further, blocks 504 and 506 can be carried out by a computing device, such as shown in Figure 1.

Method 500 can include one or more operations, functions, or actions as illustrated by one or more of blocks 502, 504, 506. Although these blocks are illustrated in a sequential order, these blocks may also be performed in parallel, and/or in a different order than those described herein. Also, the various blocks may be combined into fewer blocks, divided into additional blocks, and/or removed based upon the desired implementation. One or more of blocks 502, 504, 506 can represent a module, segment, or a portion of program code, which includes one or more instructions executable by a processor for implementing specific logical functions or steps in the process.

For this and other processes and methods disclosed herein, flowcharts show functionality and operation of one possible implementation of present embodiments. Alternative implementations are included within the scope of the example embodiments of the present disclosure in which functions may be executed out of order from that shown or discussed, including substantially concurrent or in reverse order, depending on the functionality involved.

Initially, at block 502, the method 500 includes attaching a liquid level sensor to the container. The liquid level sensor can be a liquid level sensor having a stretchable electrode layer, such as liquid level sensor 104 of Figure 1. Further, the liquid level sensor has a Young's modulus of less than 100 MPa. Attaching the liquid level sensor to the container can involve adhering the liquid level sensor to an outer surface of the container. For instance, a user or a robotic device can attach the liquid level sensor to an outer surface of the container using an adhesive layer of the liquid level sensor. As discussed above, the outer surface of the container includes a non-flat surface, and the liquid level sensor is attached to the non-flat surface such that the stretchable electrode layer conforms to a shape of the non-flat surface.

At block 504, the method 500 includes determining, using a computing device, a first capacitance between a first stretchable receiver electrode of the stretchable electrode layer and a stretchable transmitter electrode of the stretchable electrode layer. Determining the first capacitance can involve exciting the stretchable transmitter electrode with a current source, and measuring voltage changes between the first stretchable receiver electrode and the stretchable transmitter electrode. And at block 506, the method 500 includes determining, using the computing device, the liquid level within the container using at least the first capacitance. For instance, the computing device can correlate the first capacitance to a liquid level using a reference table. Or the computing device can correlate a difference between the first capacitance and a previously-determined capacitance to a change in liquid level, and determine the liquid level based on the change in liquid level and a previously-determined liquid level.

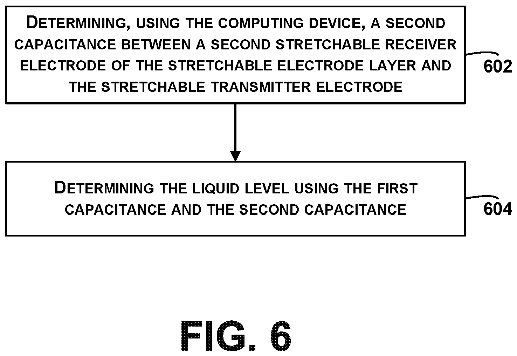

Figure 6 shows additional operations that could be performed in conjunction with the method 500 of Figure 5. As shown in Figure 6, block 602 involves determining, using, the computing device, a second capacitance between a second stretchable receiver electrode of the stretchable electrode layer and the stretchable transmitter electrode. And block 604 involves determining the liquid level using the first capacitance and the second capacitance.

The determining at block 604 can involve calculating the liquid level by providing the first capacitance and the second capacitance as inputs to a function that maps the first capacitance and the second capacitance to a liquid level. For example, the function can determine the liquid level based on a ratio between the first capacitance and the second capacitance. In line with the discussion above, the ratio between the first capacitance and the second capacitance can vary in a predictable manner as the liquid level varies along a length of the liquid level sensor. A computing device can therefore infer the liquid level based on the ratio between the first capacitance and the second capacitance. The computing device can store correlation data mapping different ratios to respective positions along the length of the sensor. For instance, the correlation data may indicate that a ratio of 1:1 corresponds to a first position, a ratio of 1.25: 1 corresponds to a second position, and a ratio of 1.4:1 corresponds to a third position, and so forth. To infer the liquid level along the length of the liquid level sensor, computing device can correlate a particular ratio to a respective position using the stored correlation date. For instance, if the ratio is 1:1, computing device could use the correlation data to determine that the 1:1 ratio corresponds to a particular position along the length of the liquid level sensor, and therefore infer that the liquid level is at the particular position.

The description of the different advantageous arrangements has been presented for purposes of illustration and description, and is not intended to be exhaustive or limited to the examples in the form disclosed. After reviewing and understanding the foregoing disclosure, many modifications and variations will be apparent to those of ordinary skill in the art. Further, different examples may provide different advantages as compared to other examples. The example or examples selected are chosen and described in order to best explain the principles, the practical application, and to enable others of ordinary skill in the art to understand the disclosure for various examples with various modifications as are suited to the particular use contemplated.

## Claims

1. A liquid level sensor (104; 400) for measuring a liquid level within a container (102), the liquid level sensor (104; 400) comprising:
a first layer (402);
a stretchable electrode layer (200; 300; 404) provided on the first layer, the stretchable electrode layer comprises:
a first stretchable receiver electrode (202; 302), and
a stretchable transmitter electrode (204; 306);
wherein the stretchable electrode layer (200; 300; 404) is stretchable and bendable such that the stretchable electrode layer (200; 300; 404) conforms to a shape of a non-flat outer surface of a container when the liquid level sensor (104; 400) is attached to the non-flat outer surface;
wherein the stretchable electrode layer (200; 300; 404) is configured to be mounted to the non-flat outer surface of the container along a desired range of heights to be sensed within the container; and
a second layer (406) provided on the stretchable electrode layer (200; 300; 404);
wherein the liquid level sensor (104; 400) has a Young's modulus of less than 100 megapascals.

2. The liquid level sensor (104; 400) of claim 1, wherein the first stretchable receiver electrode (202; 302), and the stretchable transmitter electrode (204; 306) are electroactive polymers.

3. The liquid level sensor (104; 400) of claim 1:
wherein the stretchable electrode layer (300; 404) further comprises a second stretchable receiver electrode (304),
wherein the stretchable transmitter electrode (306) is arranged between the first stretchable receiver electrode (302) and the second stretchable receiver electrode (304),
wherein a width of the first stretchable receiver electrode (302) tapers from a first width (W1) at a first position (P1) along a length (L) of the stretchable electrode layer (300; 404) to a second width (W2) at a second position (P2) along the length (L) of the stretchable electrode layer (300; 404), and
wherein a width of the second stretchable receiver electrode (304) tapers from a third width at the second position (P2) along the length (L) of the stretchable electrode layer (300; 404) to a fourth width at the first position (P1) along the length (L) of the stretchable electrode layer (300; 404).

4. The liquid level sensor (104; 400) of claim 3, wherein the first stretchable receiver electrode (302) and the second stretchable receiver electrode (304) are generally triangularly-shaped.

5. The liquid level sensor (104; 400) of claim 3, wherein the first width (W1) is equal to the third width, and wherein the second width (W2) is equal to the fourth width.

6. The liquid level sensor (104; 400) of claim 3, wherein, within a plane of the stretchable electrode layer (300):
a first side (302a) of the first stretchable receiver electrode (302) is perpendicular to a first end of the first stretchable receiver electrode (302),
a first side (304a) of the second stretchable receiver electrode (304) is perpendicular to a first end (304b) of the second stretchable receiver electrode (304), and
the first side (302a) of the first stretchable receiver electrode is parallel to the first side (304a) of the second stretchable receiver electrode.

7. The liquid level sensor (104; 400) of claim 3:
wherein the first stretchable receiver electrode (302) and the stretchable transmitter electrode (306) are separated by a first gap (G1), and
wherein the second stretchable receiver electrode (304) and the stretchable transmitter electrode (306) are separated by a second gap (G2) having a width that is equal to a width of the first gap.

8. The liquid level sensor (104; 400) of claim 1, further comprising an electrical connector (108) for coupling the liquid level sensor (104; 400) to a computing device (106), wherein the first stretchable receiver electrode (202; 302) and the stretchable transmitter electrode (204; 306) are conductively-coupled to the electrical connector (108).

9. The liquid level sensor (400) of claim 1, wherein the first layer (402) is a first dielectric polymer layer, and wherein the second layer (406) is a second dielectric polymer layer.

10. The liquid level sensor (400) of claim 1, further comprising an adhesive layer (408) printed on the second layer (406), the adhesive layer (408) configured for adhering the liquid level sensor (400) to the outer surface of the container.

11. A system comprising:
the liquid level sensor (104; 400) of any of claims 1-10; and
a computing device (106) configured to determine a first capacitance between the first stretchable receiver electrode (202; 302) and the stretchable transmitter electrode (204; 306).

12. The system of claim 11, wherein the stretchable electrode layer (200; 300; 404) comprises a second stretchable receiver electrode (304), wherein the stretchable transmitter electrode (306) is arranged between the first stretchable receiver electrode (302) and the second stretchable receiver electrode (304), wherein the computing device (106) is further configured to:
determine a second capacitance between the second stretchable receiver electrode (304) and the stretchable transmitter electrode (306), and
determine a liquid level within the container (102) based on a ratio between the first capacitance and the second capacitance.

13. The system of claim 11, further comprising a radio-frequency (RF) communication module (110) configured to wirelessly transmit data indicative of the liquid level.

14. A method for sensing a liquid level within a container (102), the method comprising:
attaching a liquid level sensor (104; 400) according to any of claims 1 to 10 to a non-flat, outer surface of the container such that the stretchable electrode layer (200; 300; 404) conforms to a shape of the non-flat, outer surface of the container, wherein the stretchable electrode layer is mounted along a desired range of heights to be sensed within the container;
determining, using a computing device (106), a first capacitance between a first stretchable receiver electrode (202; 302) of the stretchable electrode layer (200; 300; 404) and a stretchable transmitter electrode (306) of the stretchable electrode layer (200; 300; 404); and
determining, using the computing device (106), the liquid level within the container (102) using at least the first capacitance.

15. The method of claim 14, wherein the stretchable electrode layer (200; 300; 404) further comprises a second stretchable receiver electrode (304) and the method further comprises:
determining, using the computing device (106), a second capacitance between the second stretchable receiver electrode (304) and the stretchable transmitter electrode (306),
wherein determining the liquid level comprises determining the liquid level using the first capacitance and the second capacitance.

## Patentansprüche

1. Ein Füllstandsensor (104; 400) zum Messen eines Füllstands innerhalb eines Behälters (102), wobei der Füllstandsensor (104; 400) Folgendes beinhaltet:
eine erste Schicht (402);
eine dehnbare Elektrodenschicht (200; 300; 404), die auf der ersten Schicht bereitgestellt ist, wobei die dehnbare Elektrodenschicht Folgendes beinhaltet:
eine erste dehnbare Empfängerelektrode (202; 302), und
eine dehnbare Senderelektrode (204; 306);
wobei die dehnbare Elektrodenschicht (200; 300; 404) dehnbar und biegsam ist, sodass sich die dehnbare Elektrodenschicht (200; 300; 404) einer Form einer nichtflachen Außenoberfläche eines Behälters angleicht, wenn der Füllstandsensor (104; 400) an der nichtflachen Außenoberfläche angebracht wird;
wobei die dehnbare Elektrodenschicht (200; 300; 404) konfiguriert ist, um an der nichtflachen Außenoberfläche des Behälters entlang einer gewünschten Bandbreite von abzutastenden Höhen innerhalb des Behälters montiert zu werden; und
eine zweite Schicht (406), die auf der dehnbaren Elektrodenschicht (200; 300; 404) bereitgestellt ist;
wobei der Füllstandsensor (104; 400) einen Young'schen Modul von weniger als 100 Megapascal aufweist.

2. Füllstandsensor (104; 400) gemäß Anspruch 1, wobei die erste dehnbare Empfängerelektrode (202; 302) und die dehnbare Senderelektrode (204; 306) elektroaktive Polymere sind.

3. Füllstandsensor (104; 400) gemäß Anspruch 1:
wobei die dehnbare Elektrodenschicht (300; 404) ferner eine zweite dehnbare Empfängerelektrode (304) beinhaltet,
wobei die dehnbare Senderelektrode (306) zwischen der ersten dehnbaren Empfängerelektrode (302) und der zweiten dehnbaren Empfängerelektrode (304) angeordnet ist,
wobei sich eine Breite der ersten dehnbaren Empfängerelektrode (302) von einer ersten Breite (W1) an einer ersten Position (P1) entlang einer Länge (L) der dehnbaren Elektrodenschicht (300; 404) auf eine zweite Breite (W2) an einer zweiten Position (P2) entlang der Länge (L) der dehnbaren Elektrodenschicht (300; 404) verjüngt, und wobei sich eine Breite der zweiten dehnbaren Empfängerelektrode (304) von einer dritten Breite an der zweiten Position (P2) entlang der Länge (L) der dehnbaren Elektrodenschicht (300; 404) auf eine vierte Breite an der ersten Position (P1) entlang der Länge (L) der dehnbaren Elektrodenschicht (300; 404) verjüngt.

4. Füllstandsensor (104; 400) gemäß Anspruch 3, wobei die erste dehnbare Empfängerelektrode (302) und die zweite dehnbare Empfängerelektrode (304) im Allgemeinen dreieckig sind.

5. Füllstandsensor (104; 400) gemäß Anspruch 3, wobei die erste Breite (W1) gleich der dritten Breite ist und wobei die zweite Breite (W2) gleich der vierten Breite ist.

6. Füllstandsensor (104; 400) gemäß Anspruch 3, wobei innerhalb einer Ebene der dehnbaren Elektrodenschicht (300):
eine erste Seite (302a) der ersten dehnbaren Empfängerelektrode (302) senkrecht zu einem ersten Ende der ersten dehnbaren Empfängerelektrode (302) ist,
eine erste Seite (304a) der zweiten dehnbaren Empfängerelektrode (304) senkrecht zu einem ersten Ende (304b) der zweiten dehnbaren Empfängerelektrode (304) ist, und
die erste Seite (302a) der ersten dehnbaren Empfängerelektrode parallel zu der ersten Seite (304a) der zweiten dehnbaren Empfängerelektrode ist.

7. Füllstandsensor (104; 400) gemäß Anspruch 3:
wobei die erste dehnbare Empfängerelektrode (302) und die dehnbare Senderelektrode (306) durch einen ersten Spalt (G1) getrennt sind, und
wobei die zweite dehnbare Empfängerelektrode (304) und die dehnbare Senderelektrode (306) durch einen zweiten Spalt (G2) getrennt sind, der eine Breite aufweist, die gleich einer Breite des ersten Spalts ist.

8. Füllstandsensor (104; 400) gemäß Anspruch 1, der ferner einen elektrischen Verbinder (108) zum Koppeln des Füllstandsensors (104; 400) an eine Rechenvorrichtung (106) beinhaltet, wobei die erste dehnbare Empfängerelektrode (202; 302) und die dehnbare Senderelektrode (204; 306) leitend mit dem elektrischen Verbinder (108) gekoppelt sind.

9. Füllstandsensor (400) gemäß Anspruch 1, wobei die erste Schicht (402) eine erste dielektrische Polymerschicht ist und wobei die zweite Schicht (406) eine zweite dielektrische Polymerschicht ist.

10. Füllstandsensor (400) gemäß Anspruch 1, der ferner eine Haftschicht (408) beinhaltet, die auf die zweite Schicht (406) gedruckt ist, wobei die Haftschicht (408) konfiguriert ist, um den Füllstandsensor (400) an der Außenoberfläche des Behälters anzukleben.

11. Ein System, das Folgendes beinhaltet:
den Füllstandsensor (104; 400) gemäß einem der Ansprüche 1-10; und
eine Rechenvorrichtung (106), die konfiguriert ist, um eine erste Kapazität zwischen der ersten dehnbaren Empfängerelektrode (202; 302) und der dehnbaren Senderelektrode (204; 306) zu bestimmen.

12. System gemäß Anspruch 11, wobei die dehnbare Elektrodenschicht (200; 300; 404) eine zweite dehnbare Empfängerelektrode (304) beinhaltet, wobei die dehnbare Senderelektrode (306) zwischen der ersten dehnbaren Empfängerelektrode (302) und der zweiten dehnbaren Empfängerelektrode (304) angeordnet ist, wobei die Rechenvorrichtung (106) ferner für Folgendes konfiguriert ist:
Bestimmen einer zweiten Kapazität zwischen der zweiten dehnbaren Empfängerelektrode (304) und der dehnbaren Senderelektrode (306), und
Bestimmen eines Füllstands innerhalb des Behälters (102) basierend auf einem Verhältnis zwischen der ersten Kapazität und der zweiten Kapazität.

13. System gemäß Anspruch 11, das ferner ein Funkfrequenz(RF)-Kommunikationsmodul (110) beinhaltet, das konfiguriert ist, um drahtlos Daten zu übertragen, die indikativ für den Füllstand sind.

14. Ein Verfahren zum Abtasten eines Füllstands innerhalb eines Behälters (102), wobei das Verfahren Folgendes beinhaltet:
Anbringen eines Füllstandsensors (104; 400) gemäß einem der Ansprüche 1 bis 10 an einer nichtflachen Außenoberfläche des Behälters, sodass sich die dehnbare Elektrodenschicht (200; 300; 404) einer Form der nichtflachen Außenoberfläche des Behälters angleicht, wobei die dehnbare Elektrodenschicht entlang einer gewünschten Bandbreite abzutastender Höhen innerhalb des Behälters montiert wird;
Bestimmen, unter Verwendung einer Rechenvorrichtung (106), einer ersten Kapazität zwischen einer ersten dehnbaren Empfängerelektrode (202; 302) der dehnbaren Elektrodenschicht (200; 300; 404) und einer dehnbaren Senderelektrode (306) der dehnbaren Elektrodenschicht (200; 300; 404); und
Bestimmen, unter Verwendung der Rechenvorrichtung (106), des Füllstands innerhalb des Behälters (102) unter Verwendung mindestens der ersten Kapazität.

15. Verfahren gemäß Anspruch 14, wobei die dehnbare Elektrodenschicht (200; 300; 404) ferner eine zweite dehnbare Empfängerelektrode (304) beinhaltet und das Verfahren ferner Folgendes beinhaltet:
Bestimmen, unter Verwendung der Rechenvorrichtung (106), einer zweiten Kapazität zwischen der zweiten dehnbaren Empfängerelektrode (304) und der dehnbaren Senderelektrode (306),
wobei das Bestimmen des Füllstands das Bestimmen des Füllstands unter Verwendung der ersten Kapazität und der zweiten Kapazität beinhaltet.

## Revendications

1. Un détecteur de niveau de liquide (104 ; 400) destiné à mesurer un niveau de liquide au sein d'un contenant (102), le détecteur de niveau de liquide (104 ; 400) comprenant :
une première couche (402) ;
une couche d'électrodes (200 ; 300 ; 404) étirable prévue sur la première couche, la couche d'électrodes étirable comprend :
une première électrode réceptrice (202 ; 302) étirable, et
une électrode émettrice (204 ; 306) étirable ;
la couche d'électrodes (200 ; 300 ; 404) étirable étant étirable et flexible de telle sorte que la couche d'électrodes (200 ; 300 ; 404) étirable épouse une forme d'une surface externe non plate d'un contenant lorsque le détecteur de niveau de liquide (104 ; 400) est fixé à la surface externe non plate ;
la couche d'électrodes (200 ; 300 ; 404) étirable étant configurée pour être montée sur la surface externe non plate du contenant le long d'une gamme souhaitée de hauteurs devant être détectées au sein du contenant ; et
une deuxième couche (406) prévue sur la couche d'électrodes (200 ; 300 ; 404) étirable ;
le détecteur de niveau de liquide (104 ; 400) ayant un module de Young inférieur à 100 mégapascals.

2. Le détecteur de niveau de liquide (104 ; 400) de la revendication 1, où la première électrode réceptrice (202 ; 302) étirable, et l'électrode émettrice (204 ; 306) étirable sont des polymères électroactifs.

3. Le détecteur de niveau de liquide (104 ; 400) de la revendication 1 :
où la couche d'électrodes (300 ; 404) étirable comprend en outre une deuxième électrode réceptrice (304) étirable,
où l'électrode émettrice (306) étirable est agencée entre la première électrode réceptrice (302) étirable et la deuxième électrode réceptrice (304) étirable,
où une largeur de la première électrode réceptrice (302) étirable va en se réduisant à partir d'une première largeur (W1) au niveau d'une première position (P1) sur une longueur (L) de la couche d'électrodes (300 ; 404) étirable jusqu'à une deuxième largeur (W2) au niveau d'une deuxième position (P2) sur la longueur (L) de la couche d'électrodes (300 ; 404) étirable, et
où une largeur de la deuxième électrode réceptrice (304) étirable va en se réduisant à partir d'une troisième largeur au niveau de la deuxième position (P2) sur la longueur (L) de la couche d'électrodes (300 ; 404) étirable jusqu'à une quatrième largeur au niveau de la première position (P1) sur la longueur (L) de la couche d'électrodes (300 ; 404) étirable.

4. Le détecteur de niveau de liquide (104 ; 400) de la revendication 3, où la première électrode réceptrice (302) étirable et la deuxième électrode réceptrice (304) étirable sont de forme généralement triangulaire.

5. Le détecteur de niveau de liquide (104 ; 400) de la revendication 3, où la première largeur (W1) est égale à la troisième largeur, et où la deuxième largeur (W2) est égale à la quatrième largeur.

6. Le détecteur de niveau de liquide (104 ; 400) de la revendication 3, où, au sein d'un plan de la couche d'électrodes (300) étirable :
un premier côté (302a) de la première électrode réceptrice (302) étirable est perpendiculaire à une première extrémité de la première électrode réceptrice (302) étirable,
un premier côté (304a) de la deuxième électrode réceptrice (304) étirable est perpendiculaire à une première extrémité (304b) de la deuxième électrode réceptrice (304) étirable, et
le premier côté (302a) de la première électrode réceptrice étirable est parallèle au premier côté (304a) de la deuxième électrode réceptrice étirable.

7. Le détecteur de niveau de liquide (104 ; 400) de la revendication 3 :
où la première électrode réceptrice (302) étirable et l'électrode émettrice (306) étirable sont séparées par un premier écartement (G1), et
où la deuxième électrode réceptrice (304) étirable et l'électrode émettrice (306) étirable sont séparées par un deuxième écartement (G2) ayant une largeur qui est égale à une largeur du premier écartement.

8. Le détecteur de niveau de liquide (104 ; 400) de la revendication 1, comprenant en outre un connecteur électrique (108) destiné à raccorder le détecteur de niveau de liquide (104 ; 400) à un dispositif informatique (106), où la première électrode réceptrice (202 ; 302) étirable et l'électrode émettrice (204 ; 306) étirable sont raccordées de façon conductrice au connecteur électrique (108).

9. Le détecteur de niveau de liquide (400) de la revendication 1, où la première couche (402) est une première couche polymère diélectrique, et où la deuxième couche (406) est une deuxième couche polymère diélectrique.

10. Le détecteur de niveau de liquide (400) de la revendication 1, comprenant en outre une couche adhésive (408) imprimée sur la deuxième couche (406), la couche adhésive (408) étant configurée pour faire adhérer le détecteur de niveau de liquide (400) à la surface externe du contenant.

11. Un système comprenant :
le détecteur de niveau de liquide (104 ; 400) de n'importe lesquelles des revendications 1 à 10 ; et
un dispositif informatique (106) configuré pour déterminer une première capacité entre la première électrode réceptrice (202 ; 302) étirable et l'électrode émettrice étirable (204 ; 306).

12. Le système de la revendication 11, où la couche d'électrodes (200 ; 300 ; 404) étirable comprend une deuxième électrode réceptrice (304) étirable, où l'électrode émettrice (306) étirable est agencée entre la première électrode réceptrice (302) étirable et la deuxième électrode réceptrice (304) étirable, où le dispositif informatique (106) est configuré en outre pour :
déterminer une deuxième capacité entre la deuxième électrode réceptrice (304) étirable et l'électrode émettrice (306) étirable, et
déterminer un niveau de liquide au sein du contenant (102) sur la base d'un rapport entre la première capacité et la deuxième capacité.

13. Le système de la revendication 11, comprenant en outre un module de communication (110) radiofréquence (RF) configuré pour émettre sans fil des données indicatives du niveau de liquide.

14. Un procédé destiné à détecter un niveau de liquide au sein d'un contenant (102), le procédé comprenant :
le fait de fixer un détecteur de niveau de liquide (104 ; 400) selon n'importe lesquelles des revendications 1 à 10 à une surface externe, non plate, du contenant de telle sorte que la couche d'électrodes (200 ; 300 ; 404) étirable épouse une forme de la surface externe, non plate, du contenant, la couche d'électrodes étirable étant montée le long d'une gamme souhaitée de hauteurs devant être détectées au sein du contenant ;
le fait de déterminer, à l'aide d'un dispositif informatique (106), une première capacité entre une première électrode réceptrice (202 ; 302) étirable de la couche d'électrodes (200 ; 300 ; 404) étirable et une électrode émettrice (306) étirable de la couche d'électrodes (200 ; 300 ; 404) étirable ; et
le fait de déterminer, à l'aide du dispositif informatique (106), le niveau de liquide au sein du contenant (102) à l'aide au moins de la première capacité.

15. Le procédé de la revendication 14, où la couche d'électrodes (200 ; 300 ; 404) étirable comprend en outre une deuxième électrode réceptrice (304) étirable et le procédé comprend en outre :
le fait de déterminer, à l'aide du dispositif informatique (106), une deuxième capacité entre la deuxième électrode réceptrice (304) étirable et l'électrode émettrice (306) étirable,
le fait de déterminer le niveau de liquide comprenant le fait de déterminer le niveau de liquide à l'aide de la première capacité et de la deuxième capacité.
